# EUROPEAN PATENT SPECIFICATION

(11) **EP 2 184 516 B1**
(45) Date of publication and mention of the grant of the patent: **09.01.2013**
(21) Application number: 09174895.4
(22) Date of filing: 03.11.2009
(51) Int. Cl.: F16H 57/04

(54) **Vehicle sump**
Fahrzeugwanne
Collecteur de véhicule

(30) Priority: 05.11.2008 IT TO20080817
(43) Date of publication of application: 12.05.2010
(73) Proprietor: CNH Italia S.p.A., 10135 Torino (IT)
(72) Inventor: Alfino, Marco, 41100, Modena (IT); Magrini, Roberto, 41043, Formigine (Modena) (IT)
(74) Representative: CNH IP Department

(56) References cited:
- DE-C1- 3 817 981
- JP-U- 51 003 925
- US-A1- 2006 196 575

## Description

### Field of the invention

The present invention relates to a sump for use in a motor vehicle and in particular for an agricultural vehicle.

### Background of the invention

The term "sump" is used herein to refer to the lower part of any liquid filled casing in a motor vehicle. As examples, the casing may be an engine crankcase or it may be the housing of gearbox, a transfer box or a differential. In the example of a crankcase, the sump is often formed as separate cover, pan or tray that is bolted on to the engine block. In other examples, the casing may itself be of a clamshell construction whereupon the lower part of the casing may serve as the sump.

The liquid in the examples given above is the oil used for lubricating the mechanical components housed within the casing. The lubricant needs to be drained and replaced from time to time and for this reason sumps are normally fitted with a drainage plug at the lowest point where the oil can collect.

Conventionally, the drainage plug is screwed into an internally threaded boss that projects downwards from the outer surface of the sump. The sump is often a low point on the underside of the vehicle and the projecting drainage plug therefore reduces the vehicle ground clearance.

US 2006/0196575 discloses an overflow tube for an oil pan. The overflow tube has an end portion positioned in the oil pan and defining an opening of a drain hole receiving and passing the fluid overflowing.

### Object of the invention

The present invention seeks to provide a sump design that allows the lowest point in the sump to be drained while reducing the downwards projection of the drainage plug.

### Summary of the invention

According to the invention, there is provided a sump having a drainage hole and an internally screw-threaded boss surrounding the drainage hole for receiving a drainage plug, **characterised in that** the boss projects upwards into the sump and has at least one circumferential discontinuity to allow liquid within the sump to flow out of the drainage hole after removal of the drainage plug.

Conveniently, each discontinuity is formed as a radial groove in the part of the boss projecting above the inner surface of the sump.

In the preferred embodiment of the invention, the sump is formed as a casting and the boss is formed integrally with the sump during the casting process.

### Brief description of the drawings

The invention will now be described further, by way of example, with reference to the accompanying drawings, in which :
Figure 1 is a plan view from above of a sump of the invention, and
Figure 2 is a section along the line II-II in Figure 1 also showing the drainage plug.

### Detailed description of the preferred embodiment(s)

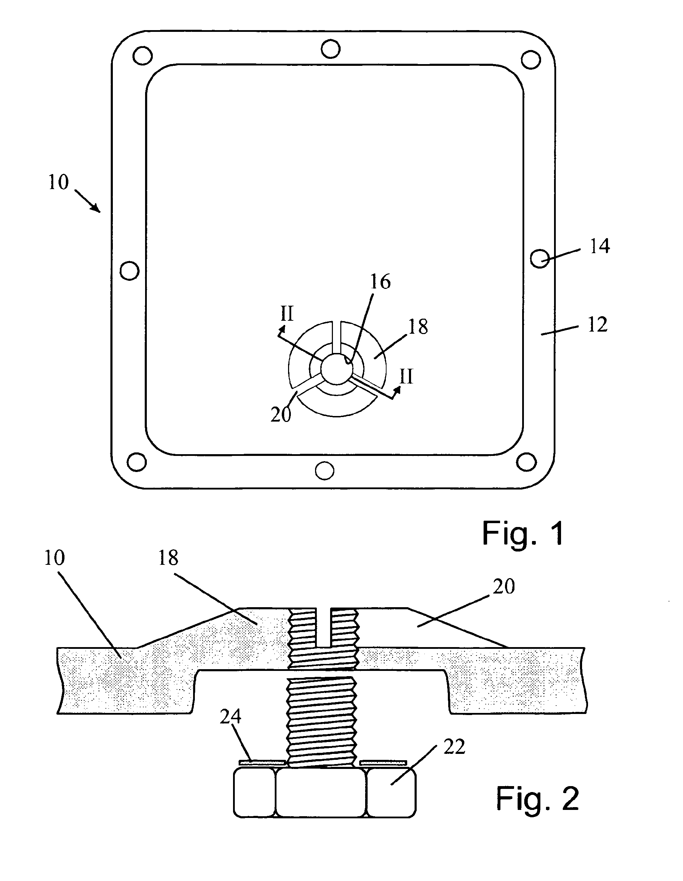

Figure 1 shows a plan view of sump 10. The sump is in the shape of a generally rectangular pan with a retaining flange 12 surrounding its upper end. The retaining flange 12 has holes 14 for receiving bolts that secure the sump 10 to a casing, which may for example be an engine crankcase or a gearbox housing. A gasket or sealing compound is used between the flange 12 and the casing to form a sealed chamber which can retain oil for lubrication. The sump need not of course be rectangular and the bottom of the sump need not be flat.

To enable the oil to be drained and replaced, a drainage hole 16 is provided, which in normal use is closed off by a removable screw-threaded drainage plug. To minimise the oil and sludge that can remain in the sump when it is drained, the hole 16 is normally located at the lowest point in the sump at which oil can collect.

Conventionally, an internally screw-threaded socket in which the drainage plug engages is arranged below the mouth of the hole 16. This however results in the plug projecting downwards and reducing the ground clearance of the vehicle.

In the present invention, the drainage plug screws into a boss 18 that projects upwards into the oil chamber of the sump. A continuous boss would however have the effect of raising the mouth of the drainage hole 16 and preventing the sump from being drained completely. To prevent this from happening, the boss 16 is rendered circumferentially discontinuous by three radial grooves 20 arranged at 120° to one another. As can be seen from the section of Figure 2, which also shows the drainage plug 22 and its sealing washer 24, the grooves 20 extend down as far as the upper surface of the sump 10 and therefore permit total drainage of the sump. The grooves need not necessarily reach down to this extent and in practice, as it is important to maintain a minimum wall thickness in the sump, it may be necessary to reach a compromise between the amount of oil retained in the sump and the extent to which the plug projects beneath the profile of the sump.

Because of the provision of the projecting boss 18 on the inside of the sump 10, its outer surface can also be recessed as shown in Figure 2 to receive the head of the drainage plug 22 thereby avoiding the need for any projection from the underside of the sump.

The boss 18 of the illustrated preferred embodiment of the invention has a conically tapering side wall. This allows oil to flow more smoothly during drainage and avoids sharp corners in which sludge can collect.

The sump in the drawings is formed as a casting and this enables the boss 18 to be formed as an integral part of the sump during the casting process. This reduces manufacturing costs by avoiding the need to attach a separately formed component to the sump and also reducing the numbering of machining steps involved.

The drainage plug illustrated in Figure 2 is essentially a bolt with a sealing washer. It should be stressed however that the type of plug used and the manner in which it is sealed is not of fundamental importance to the present invention. Hence, in place of the sealing washer, it is alternatively possible to use an O-ring seal or a conical seat seal between the plug and the sump. Furthermore, in place of a hexagonal head, the plug may have a non-circular blind hole or recess to be gripped for example by a hex key (also known as an Allen key). In this case, a much flatter head may be used having only sufficient thickness to ensure that enough torque can be applied to the plug to establish a seal and prevent the plug from working loose.

## Claims

1. A sump (10) having a drainage hole (16) and an internally screw-threaded boss (18) surrounding the drainage hole (16) for receiving a drainage plug (22), the boss (18) projecting upwards into the sump (10) and **characterized in that** the boss (18) has at least one circumferential discontinuity (20) to allow liquid within the sump (10) to flow out of the drainage hole (16) after removal of the drainage plug (22).

2. A sump (10) as claimed in claim 1, wherein each discontinuity (20) is formed as a radial groove in the part of the boss (18) projecting above the inner surface of the sump (10).

3. A sump (10) as claimed in claim 1 or 2, wherein the boss (18) has a conically tapering side wall.

4. A sump (10) as claimed in any preceding claim, wherein the lower surface of the sump (10) has a recess surrounding the drainage hole (16) to receive the head of the drainage plug (22).

5. A sump (10) as claimed in any preceding claim, wherein the sump (10) is formed as a casting and the boss (18) is formed integrally with the sump (10) during the casting process.

## Patentansprüche

1. Auffangwanne (10) mit einer Ablassbohrung (16) und einem die Ablassbohrung (16) umgebenden, mit Innengewinde versehenen Vorsprung (18) zur Aufnahme eines Ablassstopfens (22), wobei der Vorsprung (18) nach oben in die Auffangwanne (10) vorspringt, und **dadurch gekennzeichnet, dass** der Vorsprung (18) zumindest eine Umfangs-Diskontinuität (20) aufweiset, um es Flüssigkeit in der Auffangwanne (10) zu ermöglichen, aus der Ablassbohrung (16) nach der Entfernung des Ablassstopfens (22) auszufließen.

2. Auffangwanne (10) nach Anspruch 1, bei der jede Diskontinuität (20) als eine radiale Nut in dem Teil des Vorsprunges (18) gebildet ist, der über die Innenoberfläche der Auffangwanne (10) vorspringt.

3. Auffangwanne (10) nach Anspruch 1 oder 2, bei der der Vorsprung (18) eine sich konisch verjüngende Seitenwand aufweist.

4. Auffangwanne (10) nach einem der vorhergehenden Ansprüche, bei der die untere Oberfläche der Auffangwanne (10) eine die Ablassbohrung (16) umgebende Vertiefung zur Aufnahme des Kopfes des Ablassstopfens (22) aufweist.

5. Auffangwanne (10) nach einem der vorhergehenden Ansprüche, bei der die Auffangwanne (10) als ein Gussteil gebildet ist und der Vorsprung (18) einstückig mit der Auffangwanne (10) während des Gussvorganges geformt wird.

## Revendications

1. Carter d'huile (10) comportant un trou de vidange (16) et une protubérance filetée à l'intérieur (18) entourant le trou de vidange (16) destinée à recevoir un bouchon de vidange (22), la protubérance (18) faisant saillie vers le haut dans le carter (10), **caractérisé en ce que** la protubérance (18) comporte au moins une discontinuité périphérique (20) pour permettre au liquide dans le carter (10) de s'écouler hors du trou de vidange (16) une fois que le bouchon de vidange est enlevé (22).

2. Carter d'huile (10) selon la revendication 1, **caractérisé en ce que** chaque discontinuité (20) est façonnée sous forme d'une gorge radiale dans la partie de la protubérance (18) qui fait saillie au-dessus de la surface intérieure du carter (10).

3. Carter d'huile (10) selon la revendication 1 ou 2, **caractérisé en ce que** la protubérance (18) comporte une paroi latérale à rétrécissement conique.

4. Carter d'huile (10) selon l'une quelconque des revendications précédentes, **caractérisé en ce que** la surface inférieure du carter (10) comporte un évidement entourant le trou de vidange (16) destiné à recevoir la tête du bouchon de vidange (22).

5. Carter d'huile (10) selon l'une quelconque des revendications précédentes, **caractérisé en ce que** le carter (10) est façonné comme une pièce moulée et la protubérance (18) est façonnée d'un seul tenant avec le carter (10) durant le processus de moulage.
